## Europäisches Patentamt
## European Patent Office
## Office européen des brevets

(11) Veröffentlichungsnummer: **0 185 164 B1**

# EUROPÄISCHE PATENTSCHRIFT

(45) Veröffentlichungstag der Patentschrift: **03.04.91**

(21) Anmeldenummer: **85113052.6**

(22) Anmeldetag: **15.10.85**

(51) Int. Cl.⁵: **E04C 2/26**, E04C 2/30, B32B 5/18

(54) Plattenförmiges Verbundelement für Bauzwecke.

(30) Priorität: **15.12.84 DE 3445895**

(43) Veröffentlichungstag der Anmeldung:
**25.06.86 Patentblatt 86/26**

(45) Bekanntmachung des Hinweises auf die
Patenterteilung:
**03.04.91 Patentblatt 91/14**

(84) Benannte Vertragsstaaten:
**AT BE CH DE FR GB IT LI LU NL SE**

(56) Entgegenhaltungen:
**DE-A- 2 334 477**
**FR-A- 2 388 878**
**GB-A- 917 692**
**GB-A- 975 265**
**US-A- 3 459 628**

(73) Patentinhaber: **Carry-Space Leichtbauelemente GmbH**
**Malkastenstrasse 3**
**W-4000 Düsseldorf 1(DE)**

(72) Erfinder: **Imhoff, Adolf**
**Rauhe Hardt 71**
**W-5860 Iserlohn(DE)**

(74) Vertreter: **Cohausz & Florack Patentanwälte**
**Postfach 14 01 61 Schumannstrasse 97**
**W-4000 Düsseldorf 1(DE)**

**Beschreibung**

Die Erfindung betrifft ein plattenförmiges Verbundelement für Bauzwecke mit durch eine Kernschicht aus Hartschaum verbundenen Deckschichten.

Plattenförmige Verbundelemente für Bauzwecke sind in den verschiedensten Ausführungen bekannt. Ihre aus Metall oder Kunststoff bestehenden Deckschichten werden durch die aus Hartschaum bestehende Kernschicht derart miteinander verbunden, daß sich aufgrund der Sandwich-Wirkung bei geringem Gewicht eine erhöhte Tragfähigkeit ergibt, die aufgrund der Verbundwirkung höher ist als die Summe der einzelnen Tragfähigkeiten der Deckschichten und der Kernschicht.

Der Nachteil der bekannten Sandwich-Verbundelemente besteht darin, daß das Material der Deckschichten im wesentlichen unter dem Gesichtspunkt der jeweiligen Belastbarkeit des Verbundelements ausgewählt werden muß, so daß das Material der Deckschichten nur in Ausnahmefällen auf den jeweiligen Verwendungszweck des plattenförmigen Verbundelements abgestimmt werden kann. Aus diesem Grunde ist es in der Regel erforderlich, die plattenförmigen Verbundelemente mit einer Verkleidung oder zusätzlichen Deckschichten zu versehen, wenn sie beispielsweise als Außenteile der Witterung oder beim Innenausbau besonderen Beanspruchungen ausgesetzt werden.

Aus der DE-A 2 334 477 ist eine Wärmedämmplatte mit einem rundumverlaufenden Rahmen aus Kunststoffprofilen bekannt. Platte und Rahmen haben im wesentlichen keine tragende Funktion. Auch ist das Rahmenprofil im Innern hohl und nicht ausgefüllt.

Der Erfindung liegt die Aufgabe zugrunde, ein plattenförmiges Verbundelement der eingangs beschriebenen Art zu schaffen, das unabhängig vom Material und von der Ausbildung der Deckschichten eine vorgebbare Tragfähigkeit aufweist, so daß die Deckschichten nach dem jeweiligen Einsatzzweck des Verbundelements ohne Rücksicht auf das Tragverhalten ausgewählt werden können.

Die Lösung dieser Aufgabenstellung durch die Erfindung ist daduch gekennzeichnet,

- daß der Querschnitt der in der Art eines Trägers wirkenden Randprofile entsprechend der jeweiligen Belastung des Verbundelements ausgebildet und durch die aus Hartschaum bestehende Kernschicht stabilisiert ist,
- daß die Randprofile als rollgeformte Profile aus Metall hergestellt sind und
- daß der gesamte Querschnitt der Randprofile mit Hartschaum ausgefüllt ist.

Mit der Erfindung wird ein plattenförmiges Verbundelement geschaffen, dessen Tragfähigkeit sich nicht aufgrund der Sandwich-Wirkung der durch die Kernschicht aus Hartschaum miteinander verbundenen Deckschichten ergibt, sondern in der Art einer Riegelkonstruktion durch die an den Längskanten des Verbundelements angeordneten Randprofile, die jeweils in der Art eines Trägers wirken und damit die Hauptbelastung des erfindungsgemäßen Verbundelements aufnehmen. Die auf den zueinander weisenden Schenkeln der U-förmigen Randprofile aufliegenden Deckschichten dienen bestimmungsgemäß nur der Verbindung der in der Hauptbelastungsrichtung des Verbundelements liegenden Randprofile zur Bildung eines plattenförmigen Bauteils. Sie sind im Gegensatz zur Sandwich-Konstruktion nicht dazu bestimmt, Kräfte aufzunehmen, obwohl sie selbstverständlich in der Lage sein müssen, die durch äußere Einflüsse auf ihre Fläche einwirkenden Kräfte aufgrund ihrer Eigenstabilität abzutragen. Diesen äußeren Einflüssen kommt jedoch eine sehr untergeordnete Bedeutung zu, so daß beim erfindungsgemäßen Verbundelement die äußere und innere Deckschicht hinsichtlich ihrer Gestaltung und ihres verwendeten Materials vollständig auf den jeweiligen Verwendungszweck des plattenförmigen Verbundelements abgestimmt werden kann, weil das Tragverhalten des Verbundelements ausschließlich durch die entsprechend der jeweiligen Belastung ausgebildeten Randprofile bestimmt wird. Der auch den Querschnitt der U-förmigen Randprofile ausfüllende Hartschaum der Kernschicht sorgt dafür, daß die geometrische Form dieser als Träger wirkenden Randprofile auch Belastung aufrechterhalten wird, da die Formstabilität dieser U-förmigen Randprofile für das gesamte Tragverhalten des Verbundelements entscheidend ist.

Mit der Erfindung wird ein plattenförmiges Verbundelement für Bauzwecke geschaffen, das abweichend von den bisher bekannten Sandwich-Konstruktionen als Riegelkonstruktion anzusehen ist und den Vorteil besitzt, daß unabhängig von der durch die Randprofile vorgegebenen Tragfähigkeit das Material und die Ausbildung der Deckschichten auf den jeweiligen Verwendungszweck des Verbundelements abgestimmt werden können, so daß das Verbundelement ohne weitere Maßnahmen als Boden-, Dach-, Innenwand- oder Außenwandteil eines Gebäudes verwendet werden kann, d.h. mit senkrechter, waagerechter oder beliebig schräger Verlegung. Da das erfindungsgemäße Verbundelement wegen der nur in den Längskanten angeordneten Randprofile auch durch eine kontinuierliche Fertigung in Längsrichtung hergestellt werden kann, ergibt sich nicht nur ein vielseitig einsetzbares, sondern preiswert herzustellendes Bauelement mit nahezu unbegrenzten Einsatzmöglichkeiten. Zur kontinuierlichen Herstellung der erfindungsgemäßen Verbundelemente werden die Randprofile als rollgeformte Profile aus Metall hergestellt, so daß sie von einem Coil endlos herstellt werden können.

Bei einer erfindungsgemäßen Weiterbildung des Verbundelements sind die Randprofile im Bereich ihres Steges und ihrer Schenkel jeweils mit mindestens einer Nut ausgeführt. Diese Nuten dienen nicht nur der Stabilitätsverbesserung, sondern können auch zum Einlegen von Dichtungen, Verlegen von Leitungen und Einsetzen von Halte- und Abdeckprofilen sowie zur Unterbringung von Halteelementen benutzt werden, mit deren Hilfe das Verbundelement an Tragkonstruktionen befestigt wird.

Bei einer bevorzugten Ausbildung der Erfindung ist der zwischen der Nut und dem Steg liegende Teil jedes Schenkels gegenüber dem anderen Teil geringfügig nach innen versetzt, so daß an den aneinanderliegenden Randprofilen benachbarter Verbundelemente ein Aufnahmeraum für Verstärkungsprofile oder Tragelemente oder Abdeckleisten geschaffen wird, ohne daß diese Elemente über die Fläche der plattenförmigen Verbundelemente hervorstehen. Auch ein Teil des durch die Nut unterteilten Steges kann erfindungsgemäß gegenüber dem anderen Teil nach innen versetzt erden, um einen entsprechenden Aufnahmeraum zwischen benachbarten Randprofilen zu schaffen. Vorzugsweise verlaufen die nach innen versetzten Teile der Randprofile parallel zu den anderen Teilen.

Um auf nebeneinanderliegende Randprofile benachbarter Verbundelemente auf einfache Weise Abdeckleisten oder Tragelemente aufsetzen zu können, ist gemäß einem weiteren Merkmal der Erfindung mindestens eine Nut in den Schenkeln der Randprofile mit schwalbenschwanzförmigem Querschnitt ausgebildet. Durch die Hinterschneidungen dieser im Querschnitt schwalbenschwanzförmigen Nut ist es möglich, Verbindungselemente mittels Klemmkraft an den Randprofilen zu befestigen. Gemäß einem weiteren Merkmal der Erfindung ist eine weitere Nut in den Schenkeln der Randprofile mit trapezförmigem Querschnitt ausgeführt. Eine derartige Nutausbildung ermöglicht insbesondere die Unterbringung von Leitungen oder der Köpfe von Befestigungselementen, wie Schrauben oder Nieten.

Die im Steg der Randprofile vorzugsweise mittig ausgeführte Nut kann erfindungsgemäß mit zueinander parallelen Schenkeln und einem halbkreisförmig gerundeten Steg ausgebildet sein, so daß sich diese Nut vorzugsweise zum Einlegen von Dichtungen eignet. Um das Entstehen von Kältebrücken zu verhindern, wird mit der Erfindung vorgeschlagen, den Steg dieser Nut mit im Abstand voneinander liegenden Schlitzen zu versehen, die eine zwischen den beiden Schenkeln der Randprofile erfolgende Wärmeleitung erheblich herabsetzen.

Da die Tragfähigkeit des erfindungsgemäßen Verbundelements im wesentlichen durch die Randprofile bewirkt wird, können je nach Einsatzzweck die Deckschichten aus einer Gipskartonplatte, einer Faserzementtafel, einer Spanplatte, einer Kunststoffplatte, einer Blechtafel aus Stahl, Aluminium oder Kupfer mit glatter oder gestalteter Oberfläche und/oder aus einer Papierbahn oder Folie in beliebiger Kombination bestehen. Hierdurch ist es möglich, bereits bei der Herstellung des erfindungsgemäßen Verbundelements dieses dem jeweiligen Verwendungszweck anzupassen, ohne daß nach dessen Einbau zusätzliche Maßnahmen getroffen werden müssen. So ist es beispielsweise möglich, bei einer Verwendung des Verbundelements als Außenwand oder Dachteil die äußere Deckschicht aus einer Aluminiumblechtafel zu bilden, die zugleich die äußere Verkleidung bildet, wogegen die innere Deckschicht aus einer Gipskartonplatte besteht, die ohne weitere Maßnahmen mit dem gewünschten Innenanstrich oder einer Tapete versehen werden kann. Sofern bei einer Verwendung des Verbundelements als Dachteil kein Innenausbau erforderlich ist, kann die innere Deckschicht auch durch eine Papierbahn oder Folie gebildet werden, da die innere Deckschicht lediglich dazu dient, bei der Herstellung des Verbundelements das Austreten des Hartschaumes zu verhindern. Ein als Bodenelement verwendetes Verbundelement wird vorzugsweise mit einer Deckschicht aus Spanplatte hergestellt, auf die jeder beliebige Bodenbelag, beispielsweise Teppichbelag unmittelbar aufgebracht werden kann.

Gemäß einem weiteren Merkmal der Erfindung ist es auch möglich, die äußere oder innere Deckschicht einstückig mit den Randprofilen aus Kunststoff oder Metall herzustellen, so daß sich ein Verbundelement ergibt, das aus den beiden Randprofilen mit angeformter Deckschicht, einer auf die freien Ränder der Randprofile aufgelegten Deckschicht und dem Hartschaumkern besteht, der die Randprofile aussteift und den Zwischenraum zwischen den Deckschichten ausfüllt.

Mit der Erfindung wird schließlich vorgeschlagen, in bzw. auf der äußeren Deckschicht mehrere parallel zueinander verlaufende Rohre für im geschlossenen Kreislauf geführtes, von der Sonnenenergie aufzuwärmendes Wasser anzuordnen, so daß das erfindungsgemäße Verbundelement auf einfache Weise auch zum Bau eines sogenannten Energie-Daches verwendet werden kann, das zur Erwärmung von Brauchwasser oder zum Betrieb einer Wärmepumpe benutzt wird. Die Rohre können hierbei als separate Bauteile auf der äußeren Deckschicht befestigt oder einstückig mit der äußeren Deckschicht hergestellt werden, wenn diese erfindungsgemäß in Längsrichtung mit durch Abbiegen oder Einrollen hergestellten Hohlräumen ausgeführt wird, die durch eine durchlaufende Schweiß- bzw. Lötnaht als Rohr ausgeführt werden.

Auf der Zeichnung sind verschiedene Ausführungsbeispiele des erfindungsgemäßen Verbundelements dargestellt, und zwar zeigen:

Fig. 1    einen Querschnitt durch eine erste Ausführungsform des plattenförmigen Verbundelementes,

Fig. 2    einen schematischen Querschnitt durch eine als Bodenelement veriendete zweite Ausführungsform,

Fig. 3    einen der Fig.2 entsprechenden Querschnitt durch ein als Außenwandteil verwendetes Verbundelement,

Fig. 4    einen weiteren Querschnitt durch eine Ausführungsform, die als Dachelement Verwendung findet,

Fig. 5    einen Querschnitt gemäß den Figuren 2 bis 4 durch eine als Innenwandteil verwendete Ausführungsform,

Fig. 6    einen Querschnitt durch die Randprofile benachbarter Verbundelemente und eine erste Ausführungsform zur Befestigung der Verbundelemente an einem Träger,

Fig. 7    einen der Fig.6 entsprechenden Querschnitt mit einer alternativen Ausführung der Befestigung an einer Tragkonstruktion,

Fig. 8    eine weitere Ausbildungsmöglichkeit für die Befestigung der Verbundelemente an einer Unterkonstruktion bei gleichzeitiger Verwendung eines Verstärkungsprofils, ebenfalls anhand eines den Figuren 6 und 7 entsprechenden Querschnittes,

Fig. 9    eine perspektivische Ansicht der Stirnseite einer weiteren Ausführungsform des Verbundelementes mit einer zur Bildung von Rohren geformten Deckschicht und

Fig. 10   eine der Fig.9 entsprechende Darstellung einer alternativen Ausführungsform.

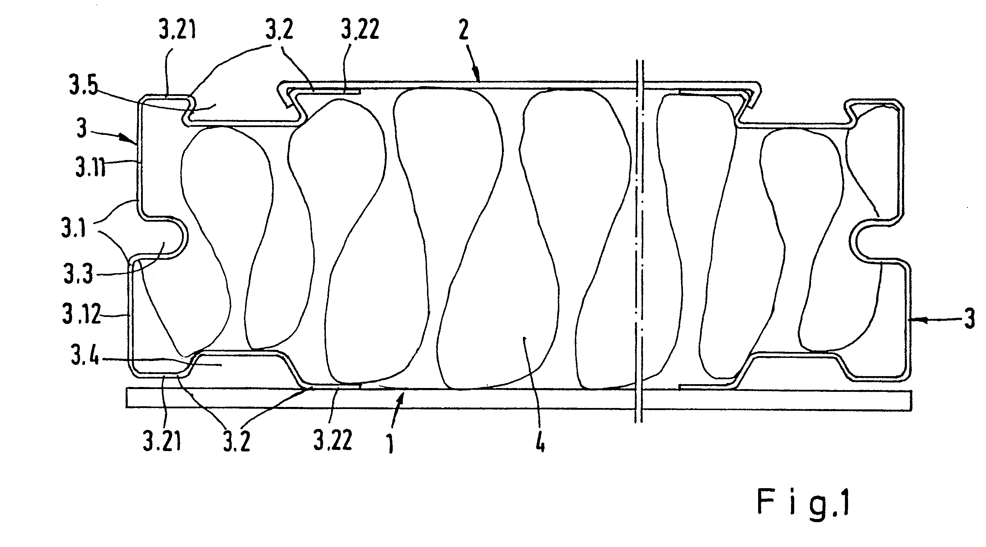

Das in einem Querschnitt dargestellte plattenförmige Verbundelement gemäß Fig.1 besteht aus einer inneren Deckschicht 1 und einer äußeren Deckschicht 2, die mit ihren Rändern jeweils auf den Schenkeln von U-förmigen Randprofilen 3 aufliegen, deren Hohlraum ebenso wie der zwischen den Deckschichten 1 und 2 gebildete Zwischenraum durch ei ne Kernschicht 4 aus Hartschaum ausgefüllt ist. Als Hartschaum wird vorzugsweise ein Kunststoffschaum wie Polyurethan verwendet.

Die im Querschnitt U-förmigen Randprofile 3 bilden einen Steg 3.1 und zwei Schenkel 3.2, wobei die beiden Schenkel 3.2 der zu einem Verbundelement gehörenden Randprofile 3 gegeneinander weisen. Sowohl im Steg 3.1 als auch in den Schenkeln 3.2 der Randprofile 3 ist beim Ausführungsbeispiel jeweils eine Nut 3.3 bzw. 3.4 bzw. 3.5 ausgebildet. Während die Nut 3.3 im Steg 3.1 mit zueinander parallelen Schenkeln und einem halbkreisförmig gerundeten Steg ausgeführt ist, besitzt die Nut 3.4 in den die innere Deckschicht 1 tragenden Schenkeln 3.2 einen trapezförmigen Querschnitt. Die in den anderen, die äußere Deckschicht 2 tragenden Schenkeln 3.2 ausgebildete Nut 3.5 besitzt einen schwalbenschwanzförmigen Querschnitt.

In Fig.1 ist weiterhin zu erkennen, daß der zwischen der Nut 3.4 bzw. 3.5 und dem Steg 3.1 liegende Teil 3.21 der Schenkel 3.2 gegenüber dem anderen Teil 3.22 der Schenkel 3.2 nach innen versetzt ist, wobei die Teile 3.21 und 3.22 parallel zueinander verlaufen. Auch der Steg 3.1, der beim Ausführungsbeispiel durch die Nut 3.3 etwa hälftig unterteilt ist, besitzt einen Teil 3.11, der gegenüber dem anderen Teil 3.12 geringfügig nach innen versetzt ist. Durch diesen Versatz wird Raum zur Unterbringung von Halteelementen bzw. Verstärkungsprofilen geschaffen, auf die später eingegangen werden wird.

Die U-förmigen Randprofile 3, die in Richtung der Hauptbelastung des plattenförmigen Verbundelementes leigen, wirken als Träger und nehmen im wesentlichen die Belastung des Verbundelements auf, so daß dieses nicht in der Art einer Sandwich-Konstruktion wirkt, sondern in der Art einer Riegelkonstruktion, insbesondere wenn das Verbundelement mit weiteren Elementen verbunden wird. Da die Deckschichten 1 und 2 bestimmungsgemäß nicht zur Aufnahme von Kräften bestimmt sind, können sie jeweils aus Materialien gebildet werden, die auf die jeweilige Verwendung des Verbundelements abgestimmt sind. Beim Ausführungsbeispiel nach Fig.1 besteht die innere Deckschicht 1 beispielsweise aus einer Gipskartonplatte und die äußere Deckschicht 2 aus einer Tafel aus Aluminiumblech. Während die die innere Deckschicht 1 bildende Gipskartonplatte mit dem Teil 3.22 des einen Schenkels 3.2 der Randprofile 3 verklebt sein kann, oder über die Verklebung der Kernschicht 4 mit der Deckschicht ohne direkte Verklebung gehalten wird, sind die auf den Teilen 3.22 der anderen Schenkel 3.2 aufliegenden Ränder der die äußere Deckschicht 2 bildenden Aluminiumblechtafel abgewinkelt, so daß sie in die schwalbenschwanzförmige Nut 3.5 eingreifen und durch diese Verklammerung an den Randprofilen 3 festgelegt sind. Das in Fig.1 dargestellte Ausführungsbeispiel des Verbundelements kann beispielsweise als Außenwand eingesetzt werden, da die mit den Randprofilen 3 verklammerte äußere Deckschicht 2 ohne weiteres der Witterung ausgesetzt werden kann, wobei benachbarte Verbundelemente gegeneinander abgedichtet werden, indem in die Nuten 3.3 ein Dichtungsprofil eingelegt wird. Die durch die Gipskartonplatte gebildete innere Deckschicht 1 kann unmittelbar mit einem Anstrich oder mit einer Tapete versehen werden, so daß das Aufbringen von Putz oder ähnliche Behandlungen des Verbundelementes entfallen. Die trapezförmige Nut 3.4 kann beispielsweise zur Verlegung von elektrischen Leitungen oder Telefon-leitungen verwendet werden.

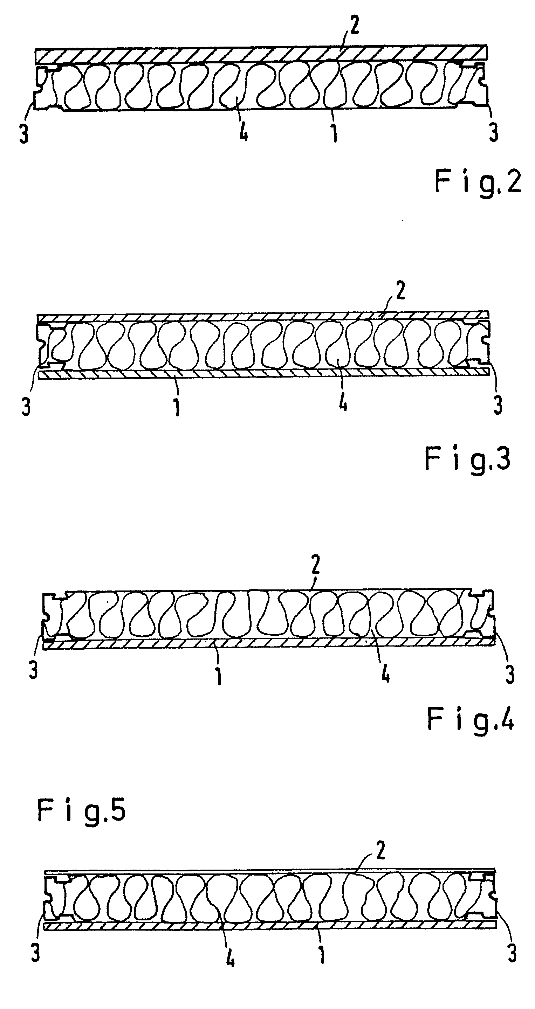

Die unter Verwendung von Randprofilen 3 gemäß Fig.1 hergestellten Verbundelemente gemäß den Figuren 2 bis 5 zeigen weitere Ausgestaltungsmöglichkeiten. So zeigt Fig.2 ein Bodenelement, dessen äußere Deckschicht 2 durch eine Spanplatte gebildet wird, wogegen die innere Deckschicht 1 einstückig mit den beiden Randprofilen 3 aus Aluminium hergestellt ist. Die Fig.3 zeigt einen schematischen Schnitt durch ein Außenwandteil, bei dem die innere Deckschicht 1 und die äußere Deckschicht 2 aus einer Faserzementplatte bestehen. Bei dem als Dachelement ausgebildeten Verbundelement gemäß Fig.4 ist die äußere Deckschicht 2 einstückig mit den Randprofilen 3 beispielsweise aus verzinktem Stahlblech hergestellt, während die innere Deckschicht 1 aus einer Gipskartonplatte besteht. Anstelle dieser Gipskartonplatte könnte auch eine Hartfaserplatte, eine Kunststoffplatte, eine Papierbahn oder eine Folie verwendet werden. Insbesondere wenn kein Ausbau des Daches erfolgen soll, reicht die Verwendung einer Papierbahn oder einer Folie aus, die innere Deckschicht 1 des Verbundelements zu bilden und das Austreten des die Kernschicht 4 bildenden Hartschaumes zu verhindern, weil die Deckschichten 1 und 2 bestimmungsgemäß keine Kräfte aufnehmen müssen. Das in Fig.5 dargestellte Ausführungsbeispiel eines als Innenwandteil zu verwendenden Verbundelementes zeigt eine Ausführungsform, bei der die innere Deckschicht 1 aus Gipskarton besteht, wogegen die äußere Deckschicht 2 eine Hartfaserplatte ist.

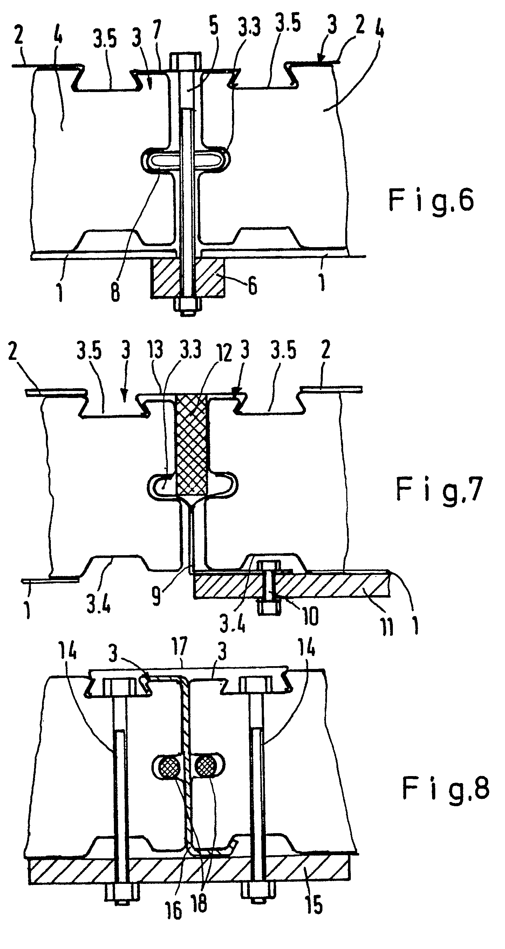

In den Figuren 6 bis 8 sind drei verschiedene Möglichkeiten zur Befestigung der Verbundelemente auf unterschiedlichen Tragkonstruktionen dargestellt. Beim Ausführungsbeispiel nach Fig.6 erfolgt die Befestigung mittels einer Schraube 5 an einem Träger 6, auf dem die inneren Deckschichten 1 benachbarter Verbundelemente anliegen. Der Kopf der den Träger 6 durchdringenden Schraube 5 stützt sich auf einem Tragband 7 ab, das mit seinen abgewinkelten Rändern in die schwalbenschwanzförmigen Nuten 3.5 der benachbarten Randprofile 3 eingreift. Die Zeichnung läßt weiterhin ein in die Nuten 3.3 der Randprofile 3 eingelegtes Dichtungsprofil 8 erkennen, das als Hohlprofil mit angeformten Dichtleisten ausgebildet wird und von den im Abstand voneinander angeordneten Schrauben 5 durchgrifen wird.

Bei der zweiten Ausführungsform nach Fig.7 erfolgt die Befestigung benachbarter Verbundelemente mit Hilfe einer Tragklammer 9, deren gabelförmiges Ende in die Nut 3.3 der Randprofile 3 eingreift und deren anderes Ende mittels einer Schraube 10 an einer Tragkonstruktion 11 befestigt ist. Der obere Kopf der Schraube 10 liegt hierbei in der trapezförmigen Nut 3.4 eines der beiden Randprofile 3, so daß die beispielsweise durch eine Papierbahn oder eine Folie gebildete innere Deckschicht 1 großflächig auf der Tragkonstruktion 11 aufliegt. Außerhalb der Tragklammer 9 ist zwischen den Stegen 3.1 der benachbarten Randprofile 3 eine Dichtleiste 12 angeordnet. Diese Dichtleiste l2 wird durch einen Abdeckstreifen 13 gehalten, der mit Hilfe seiner abgewinkelten Ränder in die schwalbenschwanzförmigen Nuten 3.5 der Randprofile 3 eingeklemmt ist.

Die in Fig.8 dargestellte Konstruktion zeigt, daß die Verbundelemente auch durch Schrauben 14 an einer Unterkonstruktion 15 befestigt werden können, wobei diese Schrauben 14 jedes Randprofil 3 im Bereich der Nuten 3.4 und 3.5 durchdringen. Beim Ausführungsbeispiel nach Fig.8 erfolgt eine Erhöhung der Tragfähigkeit der Verbundelemente durch ein Verstärkungsprofil 16, das zwischen aneinanderliegenden Randprofilen 3 benachbarter Verbundelemente angeordnet ist. Bei der dargestellten Ausführungsform hat das Verstärkungsprofil 16 einen Z-förmigen Querschnitt, so daß ein Teil des Verstärkungsprofils 16 auf dem äußeren Schenkel 3.2 des einen Randprofils 3 und auf dem inneren Schenkel 3.2 des an-deren Randprofils 3 aufliegt. Dieses Verstärkungsprofil 16 verläuft über die gesamte Länge der Verbundelemente und wird entsprechend der jeweilig aufzunehmenden Belastung aus entsprechendem Material und mit entsprechenden Dimensionierungen ausgebildet. Der Stoß zwischen benachbarten Randprofilen 3 ist beim Ausführungsbeispiel nach Fig.8 durch eine in die schwalbenschwanzförmigen Nuten 3.5 eingesetzte Klemmleiste 17 abgedeckt. Zu beiden Seiten des Verstärkungsprofils 16 befinden sich in der Nut 3.3 der Randprofile 3 schlauchförmige Dichtungen 18.

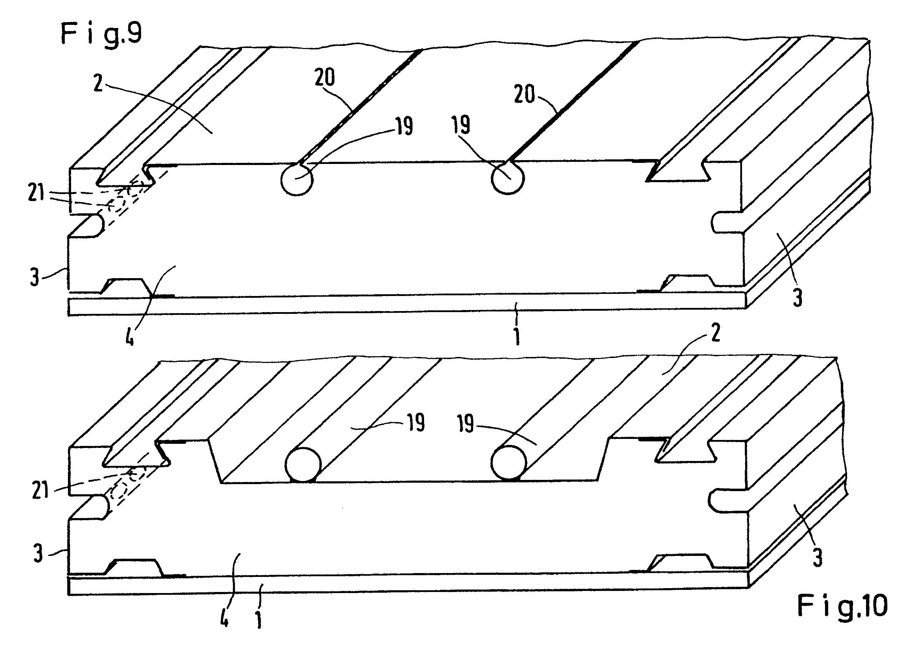

In den Figuren 9 und 10 sind schließlich Ausführungsformen gezeigt, bei denen das Verbundelement mit Rohren 19 für im geschlossenen Kreislauf geführtes Wasser versehen ist. Während beim Ausführungsbeispiel nach Fig.10 die Rohre 19 als separate Bauteile auf der nach innen eingezogenen Deckschicht 2 des Verbundelementes angeordnet sind, werden bei der Ausführungsform nach Fig.9 die Rohre 19 durch eine entsprechende Formgebung der Deckschicht 2 gebildet. Die Deckschicht 2 ist in diesem Fall mit im Querschnitt kreisförmigen Einrollungen versehen, die durch eine durchlaufende Schweiß- oder Lötnaht 20 verschlossen sind, so daß sich jeweils ein durchgehendes Rohr 19 ergibt. Insbesondere wenn die Deckschicht 2 aus Kupferblech gebildet wird, ergibt sich eine gute Wirkung der zu einem sogenannten Energiedach ausgebildeten Verbundelemente. Die auf der äußeren Deckschicht 2 angeordneten bzw. ausgebildeten Rohre 19 werden an ihren Enden an einen Kreislauf angeschlossen, der das durch Sonnenenergie erwärmte Wasser zu einem Warmwasserverbraucher bzw. einem zwischengeschalteten Speicher oder zu einer Wärmepumpe führt.

Um das Entstehen von Kältebrücken zwischen den Schenkeln 3.2 der Randprofile 3 zu verhindern, sind beim Ausführungsbeispiel nach den Figuren 9 und 10 die Stege 3.1 mit Schlitzen 21 versehen. Hierdurch wird die Wärmeleitung über die Randprofile 3 innerhalb des Bauelements erheblich verringert. Selbstverständlich können auch die anderen Ausführungen mit derartigen Schlitzen 21 versehen sein.

## Ansprüche

1. Plattenförmiges Verbundelement für Bauzwecke mit durch eine Kernschicht aus Hartschaum verbundenen Deckschichten, **dadurch gekennzeichnet,**
   - daß die Längskanten durch im Querschnitt U-förmige Randprofile (3) mit gegeneinander gerichteten Schenkeln (3.2) gebildet sind, die als Auflage für die innere bzw. äußere Deckschicht (1,2) dienen,
   - daß der Querschnitt der in der Art eines Trägers wirkenden Randprofile (3) entsprechend der jeweiligen Belastung des Verbundelements ausgebildet und durch die Kernschicht (4) stabilisiert ist,
   - daß die Randprofile (3) als rollgeformte Profile aus Metall hergestellt sind und
   - daß der gesamte Querschnitt der Randprofile (3) mit Hartschaum ausgefüllt ist.

2. Verbundelement nach Anspruch 1, **dadurch gekennzeichnet,** daß die Randprofile (3) im Bereich ihres Steges (3.1) und ihrer Schenkel (3.2) jeweils mit mindestens einer Nut (3.3, 3.4, 3.5) ausgebildet sind.

3. Verbundelement nach Anspruch 2, **dadurch gekennzeichnet,** daß der zwischen Nut (3.4, 3.5) und dem Steg (3.1) liegende Teil (3.21) jedes Schenkels (3.2) gegenüber dem anderen Teil (3.22) geringfügig nach innen versetzt ist.

4. Verbundelement nach Anspruch 3, **dadurch gekennzeichnet,** daß ein Teil (3.11) des durch die Nut (3.3) unterteilten Steges (3.1) der Randprofile (3) gegenüber dem anderen Teil (3.12) geringfügig nach innen versetzt ist.

5. Verbundelement nach den Ansprüchen 3 oder 4, **dadurch gekennzeichnet,** daß die nach innen versetzten Teile (3.11 und 3.21) der Randprofile (3) parallel zu den anderen Teilen (3.12 und 3.22) verlaufen.

6. Verbundelement nach mindestens einem der Ansprüche 1 bis 5, **dadurch gekennzeichnet,** daß mindestens eine Nut (3.5) in den Schenkeln (3.2) der Randprofile (3) mit schwalbenschwanzförmigen Querschnitt ausgebildet ist.

7. Verbundelement nach mindestens einem der Ansprüche 1 bis 6, **dadurch gekennzeichnet,** daß mindestens eine Nut (3.4) in den Schenkeln (3.2) der Randprofile (3) mit trapezförmigem Querschnitt ausgebildet ist.

8. Verbundelement nach mindestens einem der Ansprüche 1 bis 7, **dadurch gekennzeichnet,** daß im Steg (3.1) der Randprofile (3) mittig eine Nut (3.3) mit zueinander parallelen Schenkeln und einem halbkreisförmig gerundeten Steg ausgebildet ist.

9. Verbundelement nach Anspruch 8, **dadurch gekennzeichnet,** daß der Steg der Nut (3.3) mit im Abstand voneinander liegenden Schlitzen (21) versehen ist.

10. Verbundelement nach mindestens einem der Ansprüche 1 bis 9, **dadurch gekennzeichnet,** daß die Deckschichten (1,2) aus einer Gipskartonplatte, einer Eternittafel, einer Spanplatte, einer Kunststoffplatte, einer Blechtafel aus Stahl, Aluminium oder Kupfer mit glatter oder gestalteter Oberfläche und/oder aus einer Papierbahn oder Folie in beliebiger Kombination bestehen.

11. Verbundelement nach mindestens einem der Ansprüche 1 bis 10, **dadurch gekennzeichnet,** daß die innere oder äußere Deckschicht (1,2) einstückig mit den Randprofilen (3) aus Kunststoff oder Metall hergestellt ist.

12. Verbundelement nach mindestens einem der Ansprüche 1 bis 11, **dadurch gekennzeichnet,** daß in bzw. auf der äußeren Deckschicht (2) mehrere parallel zueinander verlaufende Rohre (19) für im geschlossenen Kreislauf geführtes, von der Sonnenenergie aufzuwärmendes Wasser angeordnet sind.

13. Verbundelement nach Anspruch 12, **dadurch gekennzeichnet,** daß die Rohre (19) durch Abbiegungen bzw. Einrollungen der äußeren Deckschicht (2) gebildet sind, die durch eine durchlaufende Schweiß- oder Lötnaht (20) geschlossen sind.

## Claims

1. A board-type composite element for building purposes, having cover layers connected by a core layer of rigid expanded plastics, characterized in that
   - the longitudinal edges are formed by edge sections (3) of U-shaped cross-section which have arms (3.2) directed towards one another and act as a support for the inner and outer cover layers (1, 2) respectively;
   - the cross-section of the edge sections (3), acting after the fashion of a support, is constructed in accordance with the particular loading of the composite element and is stabilized by the core layer (4);
   - the edge sections (3) are metal sections shaped by rollers; and
   - the whole cross-section of the edge sections (3) is filled with rigid expanded plastics.

2. A composite element according to claim 1, characterized in that each of the edge sections (3) is constructed with at least one groove (3.3, 3.4, 3.5) in the zone of its web (3.1) and its arms (3.2).

3. A composite element according to claim 2, characterized in that the portion (3.21) of each arm (3.2) lying between the groove (3.4, 3.5) and the web (3.1) is slightly offset inwards in relation to the other portion (3.22).

4. A composite element according to claim 3, characterized in that a portion (3.11) of the web (3.1) of the edge sections (3) which is subdivided by the groove (3.3) is slightly offset inwards in relation to the other portion (3.12).

5. A composite element according to claims 3 or 4, characterized in that the inwardly offset portions (3.11 and 3.21) of the edge sections (3) extend parallel with the other portions (3.12 and 3.22).

6. A composite element according to at least one of claims 1 to 5, characterized in that the arms (3.2) of the edge sections (3) are formed with at least one groove (3.5) of dove-tail-shaped cross-section.

7. A composite element according to at least one of claims 1 to 6, characterized in that the arms (3.2) of the edge sections (3) are formed with at least one groove (3.4) of trapezoidal cross-section.

8. A composite element according to at least one of claims 1 to 7, characterized in that the centre of the web (3.1) of the edge sections (3) is formed with a groove (3.3) having arms parallel with one another and a web rounded in a semi-circle.

9. A composite element according to claim 8, characterized in that the web of the groove (3.3) is formed with spaced-out slots (2l).

10. A composite element according to at least one of claims 1 to 9, characterized in that the cover layers (1, 2) comprise in any combination, gypsum plaster boards, Eternit panels, chipboards, plastics boards, a sheet metal panel of steel, aluminium or copper having a smooth or shaped surface and/or a paper web or foil.

11. A composite element according to at least one of claims 1 to 10, characterized in that the inner or outer cover layer (1, 2) is produced unitarily with the plastics or metal edge sections (3).

12. A composite element according to at least one of claims 1 to 11, characterized in that disposed in or on the outer cover layer (2) are a number of tubes (19) extending parallel with one another and containing water flowing in a closed circuit to be heated by solar energy.

13. A composite element according to claim 12, characterized in that the tubes (19) are formed by bent-down or rolled-in portions of the outer cover layer (2) which are closed by a continuous welding or soldering seam (20).

## Revendications

1. Elément sandwich en forme de panneau pour usages constructifs avec des couches extérieures reliées par une couche de noyau en mousse dure, caractérisé en ce que les arêtes longitudinales de l'élément sandwich en forme de panneau sont formées par des profilés de bord (3) à section transversale en forme de U à ailes (3.2) tournées l'une vers l'autre, qui servent d'appui pour la couche extérieure (1,2) interne ou externe,

- la section transversale des profilés de bord (3) agissant à la manière d'une poutre est formée en correspondance avec la charge respective de l'élément sandwich et est stabilisée par la couche de noyau (4),
- les profilés de bord (3) sont fabriqués sous forme de profilés roulés en métal et
- l'ensemble de la section transversale des profilés de bord (3) est rempli de mousse dure.

2. Elément sandwich selon la revendication 1, caractérisé en ce que les profilés de bord (3) sont réalisés avec au moins une rainure (3.3, 3.4, 3.5) dans la région de leur âme (3.1) et de leurs ailes (3.2).

3. Elément sandwich selon la revendication 2, caractérisé en ce que la partie (3.21) de chaque aile (3.2) qui se trouve entre la rainure (3.4, 3.5) et l'âme (3.1) est légèrement décalée vers l'intérieur par rapport à l'autre partie (3.22).

4. Elément sandwich selon la revendication 3, caractérisé en ce qu'une partie (3.11) de l'âme (3.1) des profilés de bord (3) divisée par la rainure (3.3) est légèrement décalée vers l'intérieur par rapport à l'autre partie (3.12).

5. Elément sandwich selon la revendication 3 ou 4, caractérisé en ce que les parties (3.11 et 3.21) des profilés de bord (3) décalées vers l'intérieur s'étendent parallèlement aux autres parties (3.12 et 3.22).

6. Elément sandwich selon au moins l'une des revendications 1 à 5, caractérisé en ce qu'au moins une rainure (3.5) à section transversale en forme de queue d'aronde est formée dans les ailes (3.2) des profilés de bord (3).

7. Elément sandwich selon au moins l'une des revendications 1 à 6, caractérisé en ce qu'au moins une autre rainure (3.7) est formée avec une section transversale trapézoïdale dans les ailes (3.2) des profilés de bord (3).

8. Elément sandwich selon au moins l'une des revendications 1 à 7, caractérisé en ce qu'une rainure (3.3) est formée avec des ailes parallèles entre elles et une âme arrondie de forme semi-circulaire, centralement dans l'âme (3.1) des profilés de bord (3).

9. Elément sandwich selon la revendication 8, caractérisé en ce que l'âme de la rainure (3.3) est munie de fentes (21) disposées écartées les unes des autres.

10. Elément sandwich selon au moins l'une des revendications 1 à 9, caractérisé en ce que les couches extérieures (1,2) sont constituées d'une plaque de placoplâtre, d'une plaque de fibrociment, d'un panneau de particules, d'une plaque en matière synthétique, d'une plaque de tôle en acier, aluminium ou cuivre à surface lisse ou façonnée et/ou d'une bande de papier ou feuille dans toute combinaison voulue.

11. Elément sandwich selon au moins l'une des revendications 1 à 10, caractérisé en ce que la couche extérieure (1.2) externe ou interne est fabriquée d'une seule pièce avec les profilés de bord (3) en matière synthétique ou métal.

12. Elément sandwich selon au moins l'une des revendications 1 à 11, caractérisé en ce que plusieurs tubes (19) s'étendant parallèlement entre eux pour de l'eau guidée en circuit fermé et devant être réchauffée par l'énergie solaire sont disposés dans ou sur la couche extérieure externe.

13. Elément sandwich selon la revendication 12, caractérisé en ce que les tubes (19) sont formés par des pliages ou des convolutions de la couche extérieure externe (2) qui sont fermés par un cordon de soudage ou de brasage (20) continu.

Fig.1

F i g. 2

F i g. 3

F i g. 4

F i g. 5

Fig.6

Fig.7

Fig.8

Fig.9

Fig.10